# EUROPEAN PATENT APPLICATION

(11) **EP 4 764 246 A1**
(43) Date of publication of application: **24.06.2026**
(21) Application number: 25224390.2
(22) Date of filing: 17.12.2025
(51) Int. Cl.: F16D 65/12

(54) **BRAKE DISC FOR DISC BRAKES AND METHOD FOR MAKING A BRAKE DISC FOR DISC BRAKES**

(30) Priority: 20.12.2024 IT 202400029379
(71) Applicant: BREMBO N.V., 24126 Bergamo (IT)
(72) Inventor: TARONI, Tommaso, 24126 Bergamo (IT); BERTONI, Francesco, 24126 Bergamo (IT); MEDICI, Stefano, 24126 Bergamo (IT); GRIGIS, Alberto, 24126 Bergamo (IT); BIONDO, Simone, 24126 Bergamo (IT)
(74) Representative: Zanettin, Gianluigi

(57) **Abstract**

The invention relates to a disc (1) for disc brakes, comprising a braking band (2), equipped with two opposing braking surfaces (2a, 2b), the braking band (2) being made of gray cast iron or steel, said disc comprising a base layer (30) covering at least one of the two braking surfaces (2a, 2b) of the braking band (2). Said base layer (30) consists of a matrix of titanium and/or a titanium alloy comprising one or more carbides and defines a tribologically active surface of the disc (1); or said base layer (30) consists of a layer of titanium and/or a titanium alloy and is in turn covered by a coating layer (300), which in turn consists of a layer based on one or more carbides and defines a tribologically active surface of the disc (1). Said one or more carbides are selected from the group consisting of titanium carbide (TiC), tungsten carbide (WC), chromium carbide, niobium carbide (NbC), molybdenum carbide (Mo2C), silicon carbide (SiC). At the interface between said base layer (30) and the braking band (2) in gray cast iron or steel there is an intermediate interfusion layer (32) having a mixed composition between said base layer (30) and the braking band (2), said base layer (30) having a crystalline structure with a growth direction predominantly orthogonal to the braking surface.

## Description

### Field of application

The present invention provides a disc for disc brakes and a method for making a disc for disc brakes.

### Prior art

A brake disc of a vehicle's disc braking system comprises an annular structure, or braking band, and a central fastening element, known as a bell, through which the disc is fixed to the rotating part of a vehicle suspension, for example a hub. The braking band is equipped with opposing braking surfaces suitable for cooperating with friction elements (brake pads), housed in at least one caliper body placed astride this braking band and integral with a non-rotating component of the vehicle suspension. The controlled interaction between the opposing brake pads and the opposing braking surfaces of the braking band causes a braking action by friction that allows the vehicle to decelerate or stop.

Generally, the brake disc is made of gray cast iron or steel. This material allows, in fact, to obtain good braking performance (especially in terms of containing wear) at relatively low costs. Discs made of carbon or carbon-ceramic materials offer significantly superior performance, but at much higher costs.

The limits of traditional discs, in cast iron or steel, are linked to excessive wear. As for gray cast iron discs, another very negative aspect is linked to excessive surface oxidation, with consequent rust formation. This aspect impacts both the performance of the brake disc and its appearance, as rust on the brake disc is unacceptable to the user from an aesthetic point of view.

This problem is particularly pronounced in brake discs for electric cars.

In fact, due to their regenerative power, electric cars require fewer conventional brake applications. This leads to greater exposure of the disc to atmospheric agents per unit of time or per km traveled.

Corrosive products on the braking surface of the brake disc will therefore be present in greater quantities and for longer, increasing the phenomenon of rust formation. All this not only has negative consequences on the aesthetics of the disc, but also affects braking performance and comfort in a non-negligible way.

One proposed solution is to paint the braking surface of the disc. The effectiveness of this solution is, however, limited in time as the coating is inevitably and quickly subject to wear. Furthermore, the coating layer negatively affects braking performance.

Attempts have been made to address these problems by making discs in gray cast iron or steel with a protective coating. The protective coating serves on the one hand to reduce the wear of the disc, and on the other to protect the gray cast iron base from surface oxidation, thus avoiding the formation of a layer of rust.

Titanium and its alloys have some very attractive properties that allow them to be used in many sectors. Some of the aforementioned properties are: excellent corrosion and erosion resistance; low density, which confers high specific strength-to-weight ratios, allowing for lighter and more resistant structures; high temperature resistance and, in some cases, cryogenic properties.

Titanium and its alloys are, however, also characterized by modest tribological properties, such as poor resistance to abrasive wear, poor resistance to wear due to fatigue (fretting) and high friction coefficient. All this has significantly limited the use of titanium and its alloys in mechanical engineering applications, and in particular in the brake disc sector.

The problem of tribological properties is related to the crystalline structure and reactivity of titanium and can be largely overcome by appropriate thermochemical treatments that superficially modify the titanium substrate, making it harder. One of the most common thermochemical treatments of titanium and its alloys is nitriding.

To avoid the technical complexity of titanium nitriding, coatings based on Ti and Ti alloys have been proposed, made with the Cold Gas Spray (CGS) deposition technique, as described in EP4174212. These coatings have proven to be resistant to corrosion and wear, but suffer under operating conditions of delamination and generalized detachments.

The protective coatings - currently available and applied on the discs - made of particularly corrosion-resistant materials such as titanium and its alloys, while offering resistance to wear, are however subject to flaking which causes them to detach from the disc itself. Furthermore, these coatings are sensitive to the generation of thermal cracks during use and to the presence of cracks during their application.

Alternatively, coatings with iron-based metals (e.g. steel), made with the Laser Metal Deposition (LMD) technique, have been proposed. These coatings have proven to be an improvement over uncoated cast iron discs. However, although they are less prone to flaking and delamination than titanium or titanium alloy coatings, they do not meet the expectations of use. These coatings are, in fact, not very resistant to corrosion, having a resistance of a few tens of hours in SST.

Therefore, there is a particularly strong need for brake discs in gray cast iron or steel with coatings that ensure resistance to corrosion and wear, and at the same time are less subject to flaking or delamination, thus ensuring adequate thermal and mechanical performance and showing reliability over time.

### Presentation of the invention

Therefore, the main object of this invention is to eliminate, or at least reduce, the aforementioned problems related to the known technique, by providing a brake disc for disc brakes that is resistant to corrosion and wear, and at the same time is less subject to flaking or delamination, thus ensuring adequate thermal and mechanical performance and showing reliability over time.

A further object of the present invention is to make available a brake disc for disc brakes that is easy and inexpensive to manufacture.

A further object of the present invention is to make available a method for producing a brake disc for disc brakes that is resistant to corrosion and wear, and at the same time is less subject to flaking or delamination, in a way that is easily applicable on an industrial scale.

### Description of the drawings

The technical characteristics of the invention can clearly be found in the content of the claims below and its advantages will become more readily apparent in the detailed description that follows, made with reference to the accompanying drawings, which illustrate one or more embodiments that are purely exemplary and not limiting, in which:

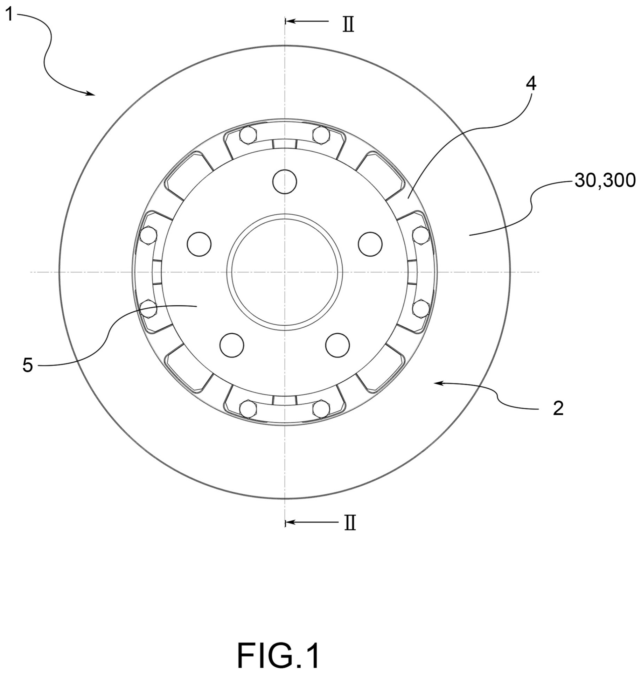

- Figure 1 shows a top plan view of a brake disc according to an embodiment of the present invention; and
- Figure 2 shows a sectional view of the disc in Figure 1 according to the section line II-II indicated therein;
- Figure 3 shows a sectional view of the disc of Figure 1 according to the section line II-II indicated therein, according to an alternative embodiment;
- Figure 4 shows a micrograph at the interface zone between the surface of a gray cast iron disc and a base layer deposited with the LMD technique in a disc according to the invention, this micrograph highlighting the growth morphology of said base layer deposited with the LMD technique;
- Figure 5 shows a micrograph at the interface area between the surface of a disc made of a known type of gray cast iron and a titanium coating layer deposited with the CGS technique on the disc, this micrograph highlighting the growth morphology of said coating layer deposited with the CGS technique;
- Figure 6 shows a micrograph at a higher magnification than Figure 4, in which the interface area between the surface of the gray cast iron disc and the base layer deposited with the LMD technique in a disc according to the invention is visible in greater detail, this micrograph highlighting the presence of growth of said base layer deposited with the LMD technique;
- Figure 7 shows an enlarged detail of a portion of the micrograph in Figure 6, to highlight the presence of an intermediate interfusion layer between the cast iron of the disc and the base layer deposited with the LMD technique;
- Figure 7a shows the same micrograph as Figure 7 in which the contours of the intermediate interfusion layer between the cast iron of the disc and the base layer deposited with the LMD technique have been highlighted;
- Figure 8 shows a micrograph that substantially frames the same area of the disc shown in Figure 7, in which three different points are indicated where an elementary analysis of the chemical composition was carried out, respectively "Spectrum 3" for the base layer, "Spectrum 4" for the intermediate interfusion layer, and "Spectrum 6" for the gray cast iron of the braking band; and
- Figure 9 shows the results of the elemental analyses conducted at the three different points indicated in Figure 8 in the form of three tables.

### Detailed description

With reference to the aforementioned figures, 1 globally indicates a brake disc according to the present invention.

According to a general embodiment of the invention, illustrated in the attached Figures, the brake disc 1 comprises a braking band 2, equipped with two opposing braking surfaces 2a and 2b, each of which at least partially defines one of the two main faces of the disc.

The braking band 2 can be made of gray cast iron or steel.

Preferably, the braking band 2 is made of gray cast iron. Preferably, the entire disc 1 is made of gray cast iron. In the following description, reference will therefore be made to a gray cast iron disc, without however excluding the possibility that it is made of steel.

The disc 1 comprises a base layer 30 which covers at least one of the two braking surfaces 2a, 2b of the braking band 2. This base layer 30 is made in direct contact with the braking surface.

As will be clarified below, the expression "made in direct contact with the braking surface" means that the base layer was formed directly on the latter without the prior deposition of a bonding layer. This expression therefore includes the possibility of forming any intermediate layers deriving from the metallurgical interaction between the base layer and the braking surface determined by the deposition of said base layer 30.

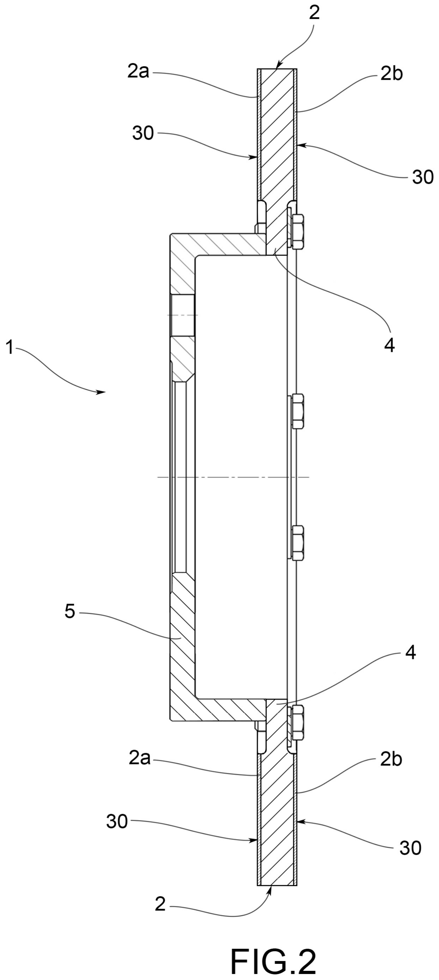

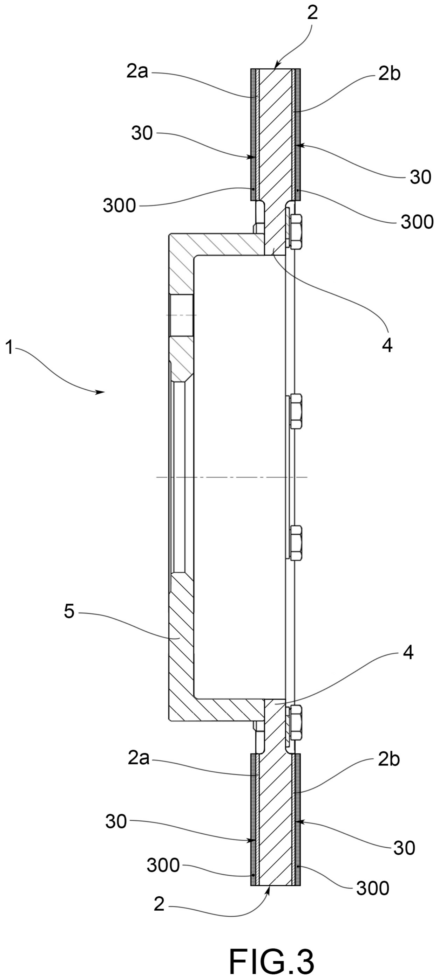

The base layer 30 can:
- consist of a titanium or titanium alloy matrix comprising one or more carbides and directly define a tribologically active surface of the disc 1 (as shown in Figure 2); or
- consist of a layer of titanium or a titanium alloy and be in turn covered by a coating layer 300 (as shown in Figure 3).

In turn, in this second case, the coating layer 300 consists of a layer based on one or more carbides and defines a tribologically active surface of the disc 1.

The term "tribologically active surface" means a surface of the brake disc on which the braking action of brake pads is directly exerted, with which a braking system of which the brake disc 1 is intended to be part is equipped.

Said one or more carbides are selected from the group consisting of titanium carbide (TiC), tungsten carbide (WC), chromium carbide (e.g., Cr3C2), niobium carbide (NbC), molybdenum carbide (Mo2C), and silicon carbide (SiC) .

At the interface between the base layer 30 and the braking band 2 in gray cast iron or steel there is an intermediate interfusion layer 32 having a mixed composition between the base layer 30 and the braking band 2.

The base layer 30 has a crystalline structure with a growth direction that is predominantly orthogonal to the braking surface.

This can be observed using optical microscopy.

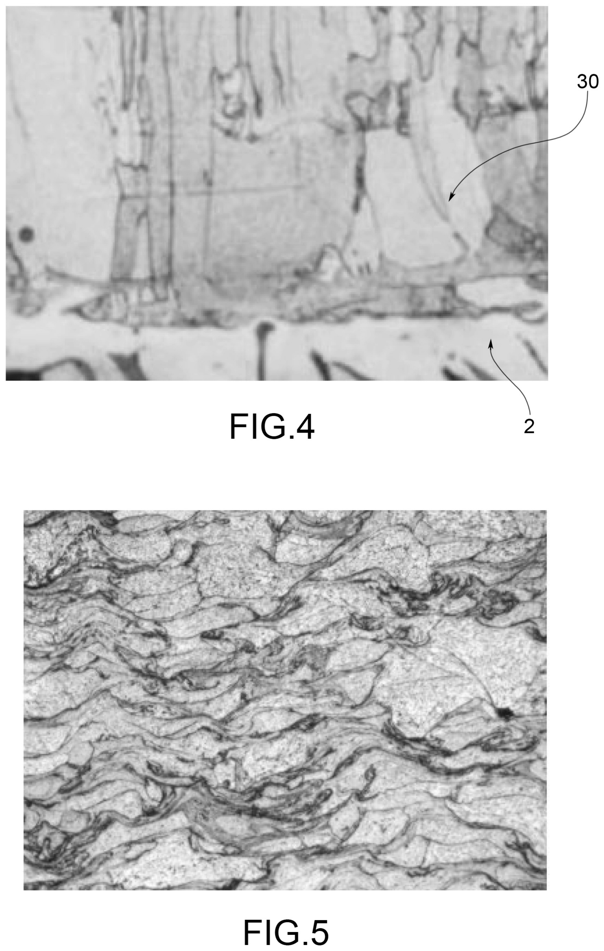

In particular, from the micrograph in Figure 4 the direction of growth of the Ti, which is predominantly orthogonal to the surface of the cast iron, is recognizable.

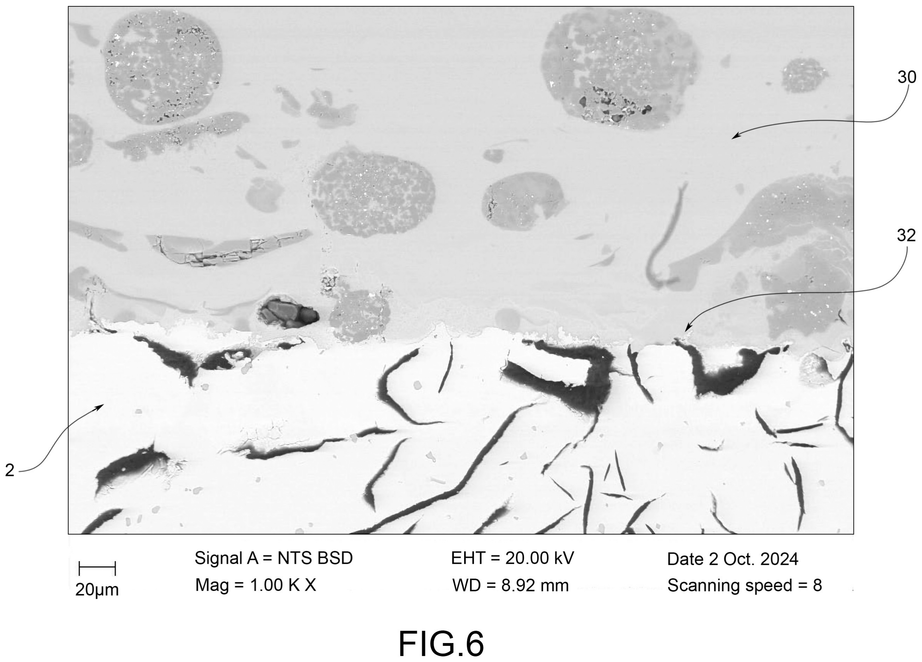

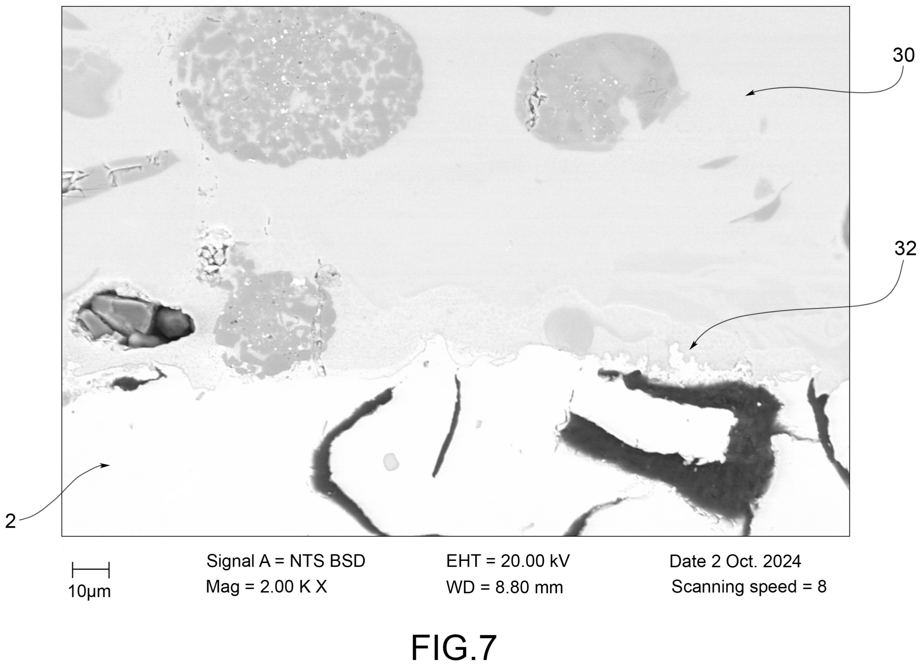

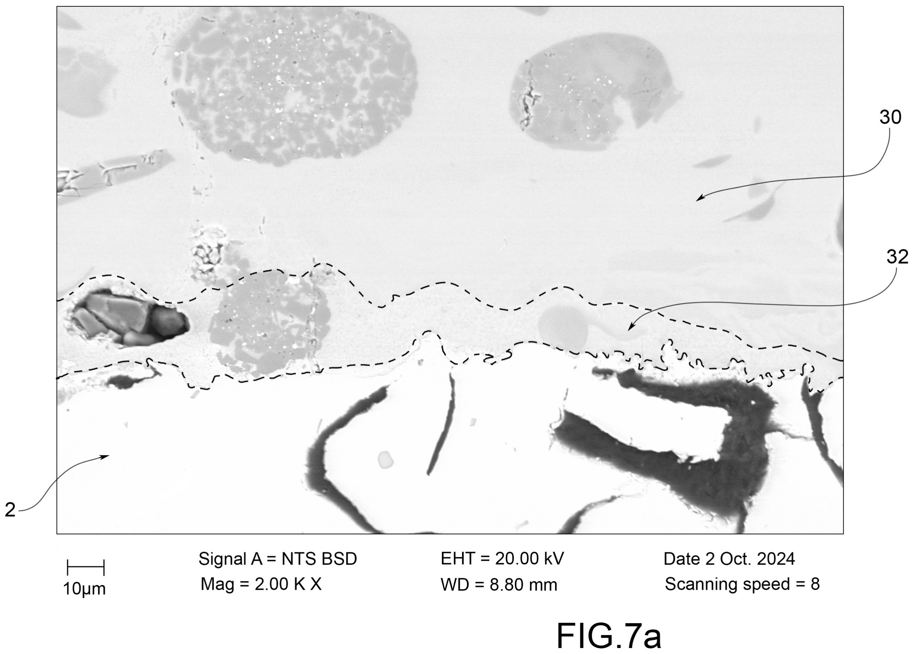

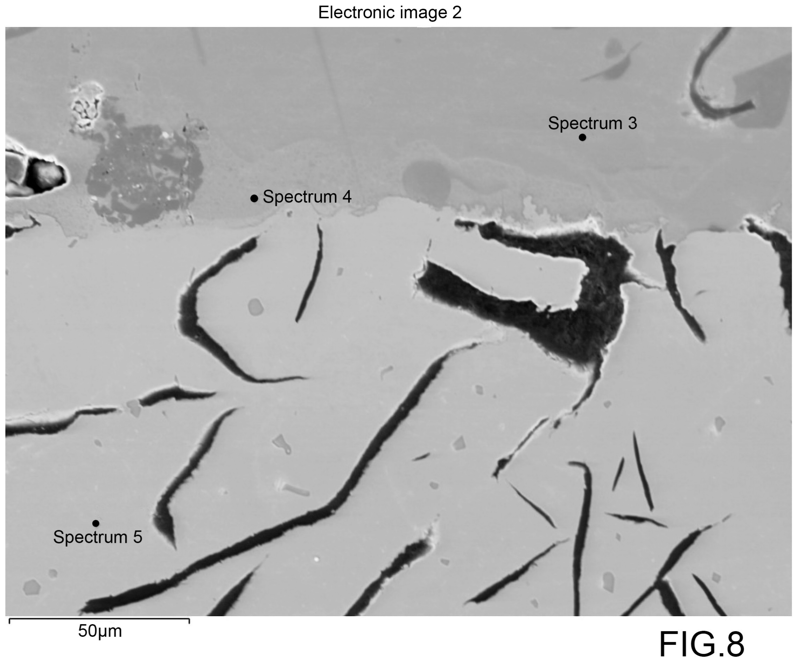

From the micrographs in Figures 6, 7, 7a and 8, the partial melting of the cast iron that led to the formation of the intermediate interfusion layer is recognizable, as well as the crystalline structure of the titanium base layer.

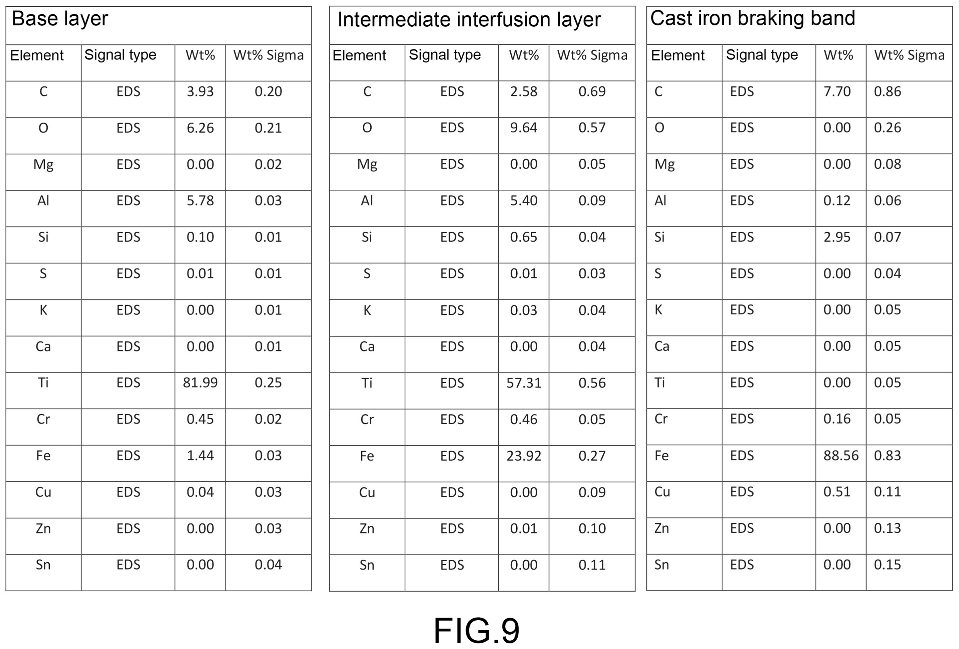

The presence of an intermediate interfusion layer 32 between the base layer 30 and the braking band 2 was confirmed by carrying out elementary analyses of the chemical composition at some points close to the interface area between the surface of a gray cast iron disc and a base layer deposited with the LMD technique in a disc according to the invention. In particular, the elemental composition of a point in the base layer, of a point in the intermediate interfusion layer, and of a point in the cast iron of the braking band was detected. The results of these analyses are shown in the tables of Figure 9. The data confirms that the intermediate interfusion layer has a mixed composition between the base layer 30 and the braking band 2.

It was surprisingly verified that a base layer 30 thus produced confers resistance to corrosion and wear to the disc 1, and at the same time is not subject to flaking or delamination (or at least to an extremely small extent compared to coatings in titanium or its known alloys).

Disc 1 according to the invention therefore ensures adequate thermal and mechanical performance, showing reliability over time.

Without necessarily wanting to be bound to this theoretical explanation, in relation to the substantial absence of flaking or delamination, it has been hypothesized that:
- the intermediate interfusion layer guarantees a very stable and resistant connection of the base layer 30 to the braking band, since it is the site of interpenetrations between the two parts; these interpenetrations oppose tensions parallel to the braking surface responsible for delamination and flaking;
- Similarly, the crystalline structure with a growth direction predominantly orthogonal to the braking surface interrupts the possible propagation of cracks parallel to the braking surface, which are responsible for delamination and flaking.

The two aspects therefore cooperate synergistically in counteracting delamination and flaking phenomena.

In particular, these two aspects guarantee the correct adhesion to the braking surface in the presence of thermal loads during braking.

The resistance to corrosion derives, instead, from the presence of titanium. In particular, the use of titanium or one of its alloys guarantees:
- corrosion resistance of hundreds of hours in SST
- excellent resistance to hot corrosion
- good mechanical ductility properties

The poor wear resistance of titanium is compensated by the presence of carbides, dispersed in the titanium or titanium alloy matrix that forms the base layer 30 or concentrated in the coating layer 300.

The use of a titanium alloy instead of pure titanium improves resistance to thermal shock during braking and at the same time increases hardness with advantages in terms of mileage and reduction of dust emissions.

Thanks to the invention, it is therefore possible to create a brake disc that combines the corrosion resistance of titanium with wear resistance and with a substantial absence of delamination and flaking.

Preferably, the aforementioned base layer 30 is the result of the metallurgical bond that is created between at least one of said braking surfaces 2a, 2b and a first particulate composition deposited on said braking surface 2a, 2b with a deposition technique through the use of a laser beam, preferably by means of the Laser Metal Deposition (LMD) technique. Said first particulate composition has a composition equivalent to that of said base layer 30.

In particular, the aforementioned titanium alloy comprises aluminum, preferably with an aluminum content of no less than 2% by weight.

Advantageously, the aforementioned titanium alloy also comprises vanadium, preferably with a vanadium content of no less than 1% by weight.

Preferably, the aforementioned titanium alloy is an alloy of titanium, aluminum, and vanadium, in which:
- aluminum is present with a weight content of between 2% and 8%;
- vanadium is present with a weight content of between 1% and 10%;
- the remaining part of said alloy is titanium.

Advantageously, the aforementioned base layer 30 has a thickness of between 5 µm and 700 µm, preferably between 50 µm and 400 µm.

As already pointed out, the aforementioned base layer 30 may consist of a titanium matrix or a titanium alloy comprising one or more carbides, wherein the weight content of carbides is between 2% and 80%. The amplitude of the interval is linked to the fact that the density of the usable carbides is highly variable and is reflected in the % by weight. The values closest to 2% of the range are attributable to the lower carbide densities than that of Ti, while the values closest to 80% are attributable to those greater than that of Ti.

The aforementioned base layer 30 may consist only of titanium or of said titanium alloy.

Advantageously, the coating layer 300 can consist of at least 60% by weight of one or more of said carbides, preferably at least 70% by weight. In this case, the aforementioned coating layer 300 is composed of a metal matrix (preferably iron or aluminum based) for the remaining part.

Advantageously, the coating layer 300 can be obtained with:
- Thermal Spray deposition technique, for example with HVOF (High Velocity Oxy-Fuel) technique, or with HVAF (High Velocity Air Fuel) technique or with APS (Atmosphere plasma spray) technique; or
- with Cold Spray deposition technique, for example with KM (Kinetic Metallization) technique; or
- with a deposition technique using a laser beam, for example with the LMD (Laser Metal Deposition) technique, or with the HSLC - high speed laser cladding technique, or with the EHLA - Extreme High Speed Laser Application technique, or with the TSC - Top Speed Cladding technique.

Advantageously, if provided, the coating layer 300 has a thickness of between 10 µm and 150 µm, preferably between 30 µm and 120 µm.

For ease of discussion, the brake disc 1 will now be described together with the method according to the present invention. The brake disc 1 is preferably, but not necessarily, made with the method according to the invention that will now be described.

In accordance with a general form of implementation of the method according to the invention, the method comprises the following operating steps:
a) preparing a brake disc, comprising a braking band with two opposing braking surfaces, each of which at least partially defines one of the two main faces of the disc, the braking band being made of gray cast iron or steel;
b) depositing a first particulate composition comprising titanium or a titanium alloy on at least one of said braking surfaces 2a, 2b by means of a deposition technique using a laser beam, preferably by means of a Laser Metal Deposition (LMD) technique, forming a base layer 30 that covers at least one of the two braking surfaces 2a, 2b of the braking band 2.

Advantageously, deposition by means of a laser beam deposition technique, preferably by means of a Laser Metal Deposition (LMD) technique, allows:
- the formation of an intermediate interfusion layer having a mixed composition between the base layer 30 and the braking band 2, at the interface between the base layer 30 and the braking band 2 in gray cast iron or steel; and
- the formation of the base layer 30 having a crystalline structure with a growth direction predominantly orthogonal to the braking surface.

The method according to the invention comprises producing a tribologically active coating layer comprising one or more carbides on said at least one braking surface, according to two alternative methods:
a) including said one or more carbides in the first particle composition to be deposited in step b), which in this case consists of titanium or a mixture of titanium and one or more titanium alloying metals, and in addition said one or more carbides; in this case, said tribologically active coating layer is constituted directly by said base layer 30;
   or
b) by depositing an additional layer 300 based on said one or more carbides on top of said base layer 30 in a phase c) following said phase b), in which case the first particulate composition to be deposited in phase b) consists of titanium or a mixture of titanium and one or more titanium alloying metals; in which case said tribologically active coating layer consists of said additional layer 300.

In both embodiments, said one or more carbides are selected from the group consisting of titanium carbide (TiC), tungsten carbide (WC), chromium carbide (e.g., Cr3C2), niobium carbide (NbC), molybdenum carbide (Mo2C), and silicon carbide (SiC).

In particular, the aforementioned titanium alloy comprises aluminum, preferably with an aluminum content by weight of no less than 2%.

Advantageously, the aforementioned titanium alloy also comprises vanadium, preferably with a vanadium content by weight of not less than 1%.

Preferably, the aforementioned titanium alloy is an alloy of titanium, aluminum and vanadium, in which:
- aluminum is present with a weight content between 2% and 8%;
- vanadium is present with a weight content of between 1% and 10%;
- the remaining part of said alloy is titanium.

In particular, phase b) can be carried out until a thickness of between 5 µm and 700 µm, preferably between 50 µm and 400 µm, is obtained for said base layer 30.

Following the aforementioned method a), preferably, in the aforementioned first particle composition, the weight content of said one or more carbides is between 2% and 80%.

Preferably, following the aforementioned method a), the first particle composition consists of titanium or titanium alloy particles mixed with a second particle composition.

More specifically, said second particle composition comprises said one or more carbides.

Following the aforementioned method b), preferably in said phase c), said additional layer 300 is obtained by depositing a second particle composition in which the weight content of said one or more carbides is at least 60% by weight, preferably at least 70% by weight. The second particle composition is made up of a metal matrix, preferably iron or aluminum based, for the remaining part.

In particular, the second particle composition is the same as that used to define the base layer 30 according to method a).

Advantageously, in said phase c) the second particle composition can be deposited with:
- Thermal Spray deposition technique, for example with HVOF (High Velocity Oxy-Fuel) technique, or with HVAF (High Velocity Air Fuel) technique or with APS (Atmosphere Plasma Spray) technique; or
- with the Cold Spray deposition technique, for example with the KM (Kinetic Metallization) technique; or
- with a deposition technique using a laser beam, for example with the LMD (Laser Metal Deposition) technique, or with the HSLC - high speed laser cladding technique, or with the EHLA - Extreme High Speed Laser Application technique, or with the TSC - Top Speed Cladding technique.

In particular, phase c) can be carried out until a thickness of between 10 µm and 150 µm, preferably between 30 µm and 120 µm, is obtained for said additional layer 300.

Advantageously, step b) can be carried out by using at least one first laser beam having a power between 12 and 22 kW, preferably said laser beam being of the Gaussian or top-hat or top-hat ring type.

In step b), the first particle composition is deposited with a single nozzle or with two or more nozzles.

Preferably, in step b) the first particle composition is deposited
- with a total flow rate of between 30 g/min and 300 g/min;
- with a tangential speed between 100 m/min and 250 m/min; and
- with a deposition rate of between 1 m2/h and 14 m2/h.

Advantageously, during step b), upstream of the use of said first laser beam, a further laser beam having a power of between 1 and 15 kW may be used, preferably said further laser beam being of the Gaussian or top-hat or top-hat ring type. Operationally, said further laser beam performs a pre-treatment of at least one of said braking surfaces 2a, 2b on which the first particulate composition is intended to be deposited.

Advantageously, if mode b) is used, during step b), downstream of the use of said first laser beam, a further laser beam having a power of between 1 and 20 kW may be used, preferably said further laser beam being of the Gaussian or top-hat or top-hat ring type. Operationally, said further laser beam performs a post-treatment of at least one of said braking surfaces (2a, 2b) on which the first particle composition was previously deposited to facilitate the adhesion of the additional layer 300.

According to one embodiment, the formation of a metallurgical bond between the substrate and the deposited or welded layers above said substrate is carried out by means of one or more laser beams, for example a bifocal laser.

As can be appreciated from what has been described, the brake disc and the method for making this brake disc according to the invention make it possible to overcome the drawbacks presented in the prior art.

It has surprisingly been found that a brake disc 1 according to the invention combines resistance to corrosion and wear, and at the same time is not subject to flaking or delamination (or at least to an extremely small extent compared to coatings in titanium or its known alloys).

The disc 1 according to the invention thus ensures adequate thermal and mechanical performance, showing reliability over time.

Without necessarily wanting to be bound to this theoretical explanation, in relation to the substantial absence of flaking or delamination, it has been hypothesized that:
- the intermediate interfusion layer guarantees a very stable and resistant connection of the base layer 30 to the braking band, since it is the site of interpenetrations between the two parts; these interpenetrations oppose tensions parallel to the braking surface responsible for delamination and flaking;
- similarly, the crystalline structure with a growth direction predominantly orthogonal to the braking surface interrupts the possible propagation of cracks parallel to the braking surface, which are responsible for delamination and flaking.

The two aspects therefore cooperate synergistically in counteracting delamination and flaking phenomena.

In particular, these two aspects guarantee the correct adhesion to the braking surface in the presence of thermal loads during braking.

The resistance to corrosion derives, instead, from the presence of titanium. In particular, the use of titanium or one of its alloys guarantees:
- corrosion resistance of hundreds of hours in SST
- excellent resistance to hot corrosion
- good mechanical ductility properties

The poor wear resistance of titanium is compensated by the presence of carbides, dispersed in the titanium or titanium alloy matrix that forms the base layer 30 or concentrated in the coating layer 300.

The use of a titanium alloy instead of pure titanium improves resistance to thermal shock during braking and at the same time increases hardness with advantages in terms of mileage and reduction of dust emission.

Thanks to the invention, it is therefore possible to create a brake disc that combines the corrosion resistance of titanium with wear resistance and with a substantial absence of delamination and flaking.

The brake disc for disc brakes according to the invention is easy and inexpensive to manufacture.

Finally, the method according to the invention makes it possible to manufacture a brake disc for disc brakes that is resistant to corrosion and wear, and at the same time is less subject to flaking or delamination, in a way that is easily applicable on an industrial scale.

## Claims

1. Disc (1) for disc brakes, comprising a braking band (2), equipped with two opposing braking surfaces (2a, 2b), the braking band (2) being made of gray cast iron or steel, said disc comprising a base layer (30) covering at least one of the two braking surfaces (2a, 2b) of the braking band (2),
**characterized in that:**
- said base layer (30) consists of a titanium matrix and/or a titanium alloy comprising one or more carbides and defines a tribologically active surface of the disc (1); or
- said base layer (30) consists of a layer of titanium and/or a titanium alloy and is in turn covered by a coating layer (300), which in turn consists of a layer based on one or more carbides and defines a tribologically active surface of the disc (1);
wherein said one or more carbides are selected from the group consisting of titanium carbide (TiC), tungsten carbide (WC), chromium carbide, niobium carbide (NbC), molybdenum carbide (Mo2C), silicon carbide (SiC),
and wherein at the interface between said base layer (30) and the braking band (2) in gray cast iron or steel there is an intermediate interfusion layer (32) having a mixed composition between said base layer (30) and the braking band (2), said base layer (30) having a crystalline structure with a growth direction predominantly orthogonal to the braking surface.

2. Disc (1) according to claim 1, wherein said base layer (30) is the result of the metallurgical bond that is created between at least one of said braking surfaces (2a, 2b) and a first particulate composition deposited on said braking surface (2a, 2b) with a deposition technique using a laser beam, preferably by means of a Laser Metal Deposition (LMD) technique, wherein said first particulate composition has a composition equivalent to that of said base layer (30).

3. Disc (1) according to claim 1 or 2, wherein said titanium alloy comprises aluminum, preferably with an aluminum weight content of not less than 2%, wherein said titanium alloy further comprises vanadium, preferably with a vanadium content by weight of not less than 1% and wherein preferably said titanium alloy is an alloy of titanium, aluminum and vanadium, wherein aluminum is present with a weight content of between 2% and 8% and vanadium is present with a weight content of between 1% and 10%, the remaining part of said alloy being titanium.

4. Disc (1) according to any one of the preceding claims, wherein said base layer (30) has a thickness between 5 µm and 700 µm, preferably between 50 µm and 400 µm.

5. Disc (1) according to any one of the preceding claims, wherein said base layer (30) consists of titanium or of said titanium alloy or wherein said base layer (30) consists of a titanium matrix or a titanium alloy containing one or more carbides, wherein the weight content of carbides is between 2% and 80%.

6. Disc (1) according to any one of claims 1 to 7, wherein said coating layer (300) consists of at least 60% by weight of one or more of said carbides, preferably at least 70% by weight, wherein preferably said coating layer (300) consists of metal matrix for the remaining part or wherein said coating layer (300) consists entirely of one or more of said carbides.

7. Disc (1) according to any one of the preceding claims, wherein said coating layer (300) has a thickness between 10 µm and 150 µm, preferably between 30 µm and 120 µm, more preferably between 50 µm and 90 µm.

8. Method for making a brake disc (1), comprising the following operating steps:
a) preparing a brake disc (1) comprising a braking band (2) equipped with two opposing braking surfaces (2a, 2b), the braking band being made of gray cast iron or steel;
b) depositing a first particulate composition comprising titanium or a titanium alloy on at least one of said braking surfaces (2a, 2b) by means of a deposition technique using a laser beam, preferably by means of a Laser Metal Deposition (LMD) technique, forming a base layer (30) covering at least one of the two braking surfaces (2a, 2b) of the braking band (2);
wherein said method comprises forming on said at least one braking surface a tribologically active coating layer comprising one or more carbides:
- including said one or more carbides in the first particulate composition to be deposited in step b), which in this case comprises titanium or a mixture of titanium and one or more titanium alloying metals, and said one or more carbides, in which case said tribologically active coating layer is constituted directly by said base layer (30);
or
- depositing on said base layer (30) in a phase c) subsequent to said phase b) an additional layer (300) based on said one or more carbides, in which case the first particulate composition to be deposited in phase b) consisting of titanium or a mixture of titanium and one or more titanium alloying metals, in which case said tribologically active coating layer is constituted by said additional layer (300),
wherein said one or more carbides are selected from the group consisting of titanium carbide (TiC), tungsten carbide (WC), chromium carbide, niobium carbide (NbC), molybdenum carbide (Mo2C), silicon carbide (SiC).

9. Method according to claim 8, wherein said titanium alloy comprises aluminum, preferably with an aluminum content by weight of not less than 2%, wherein preferably said titanium alloy further comprises vanadium, preferably with a vanadium content by weight of not less than 1% and wherein said titanium alloy is an alloy of titanium, aluminum and vanadium, wherein aluminum is present with a weight content of between 2% and 8% and vanadium is present with a weight content of between 1% and 10%, the remaining part of said alloy being titanium.

10. A method according to any one of claims 8 to 9, wherein step b) is carried out until a thickness of between 5 µm and 700 µm, preferably between 50 µm and 400 µm, is obtained for said base layer (30) and / or wherein in said first particulate composition the weight content of said one or more carbides is between 2% and 80%.

11. Method according to any one of claims 8 to 10, wherein in said step c) said additional layer (300) is obtained by depositing a second particulate composition in which the weight content of said one or more carbides is at least 60% by weight, preferably at least 70% by weight, wherein said second particulate composition consists of metals for the remaining part or wherein said second particulate composition consists entirely of one or more of said carbides.

12. Method according to claim 11, wherein in said step c) the second particulate composition is deposited with:
- Thermal Spray deposition technique, for example with HVOF (High Velocity Oxy-Fuel) technique, or with HVAF (High Velocity Air Fuel) technique or with APS (Atmosphere plasma spray) technique; or
- with Cold Spray deposition technique, for example with KM (Kinetic Metallization) technique; or
- deposition technique using a laser beam, for example with LMD (Laser Metal Deposition) technique, or with HSLC
- high speed laser cladding technique, or with EHLA - Extreme High Speed Laser Application technique, or with TSC - Top Speed Cladding technique and/or wherein step c) is conducted until a thickness of between 10 µm and 150 µm, preferably between 30 µm and 120 µm, more preferably between 50 µm and 90 µm, is obtained for said additional layer (300).

13. Method according to any one of claims 8 to 12, wherein step b) is carried out by using at least one first laser beam having a power between 12 and 22 kW, preferably said laser beam being of the Gaussian or top-hat or top-hat ring type and/or wherein in said step b) said first particulate composition is deposited with a single nozzle or with two or more nozzles:
- with a total flow rate of between 30 g/min and 300 g/min;
- with a tangential speed between 100 m/min and 250 m/min;
- with a deposition rate of between 1 m2/h and 14 m2/h.

14. Method according to claim 13, wherein during step b), upstream of the use of said first laser beam, a further laser beam having a power between 1 and 15 kW is used, preferably said further laser beam being of the Gaussian or top-hat or top-hat ring type, said further laser beam performing a pre-treatment of at least one of said braking surfaces (2a, 2b) on which the first particulate composition is intended to be deposited and/or wherein during step b), downstream of the use of said first laser beam, a further laser beam having a power between 1 and 20 kW is used, preferably said further laser beam being of the Gaussian or top-hat or top-hat ring type, said further laser beam performing a post-treatment of at least one of said braking surfaces (2a, 2b) on which the first particle composition has been previously deposited.
